# EUROPEAN PATENT APPLICATION

(11) **EP 1 818 787 A2**
(43) Date of publication of application: **15.08.2007**
(21) Application number: 07101952.5
(22) Date of filing: 08.02.2007
(51) Int. Cl.: G06F 3/039, A47B 21/03

(54) **Ergonomic wrist rest, particularlly for using computer keybboards and mice**

(30) Priority: 13.02.2006 IT MO20060045; 13.02.2006 IT MO20060046; 13.02.2006 IT MO20060047; 13.02.2006 IT MO20060048; 13.02.2006 IT MO20060049; 13.02.2006 IT MO20060050
(71) Applicant: Lambertini, Aurelio, 40012 Calderara di Reno BO (IT); Lambertini, Silvano, 40037 Sasso Marconi BO (IT)
(72) Inventor: Lambertini, Aurelio, 40012 Calderara di Reno BO (IT); Lambertini, Silvano, 40037 Sasso Marconi BO (IT)
(74) Representative: Modiano, Micaela Nadia

(57) **Abstract**

An ergonomic wrist rest (1) particularly for using computer keyboards and mice, which comprises at least one base element (2), which can be positioned proximate to a keyboard (T) or mouse (M) and has a lower face (3) which forms a resting surface for the base element (2) which is adapted to rest on a supporting surface (P). The device comprises at least one resting element (4), which is superimposed detachably on the base element (2) at an upper face (5) thereof which lies opposite the lower face (3) and faces a lower surface (23) of the resting element (4), the upper surface (25) of the resting element which lies opposite the lower surface forming a resting region for at least one wrist and detachable means for the connection of the resting element to the base element.

## Description

The present invention relates to an ergonomic wrist rest particularly for using computer keyboards and mice.

Legislative decree 626/94, currently in force, sets the optimum working conditions for people who use systematically and continuously an apparatus provided with a visual display terminal.

According to the articles contained in said decree, the optimum position for a person who is working with a visual display terminal entails in particular that the shoulders must be relaxed, that the arm and forearm must form a right angle, and that the wrists and hands must form a straight line.

Further, the keyboard of a computer must be arranged so as to leave between said keyboard and the front edge of the resting table a space which is sufficient to rest one's forearms while typing.

Failure to observe this precaution can lead to an insufficient supply of blood to the muscles, which accordingly become tired and ache.

However, by resting one's wrists or forearms on a surface which has edges or at a height which is not suitable for typing on the keyboard or using the mouse, unpleasant muscle tensions or tendon inflammations can occur.

Currently, in order to facilitate compliance with these provisions and therefore the use of a correct posture during work by the operator, in order to avoid the drawbacks described above, wrist rests are known which can be positioned proximate to the keyboard and/or mouse.

These devices consist substantially of a support which is raised with respect to the resting surface of the keypad and mouse and on which the wrists rest during work.

This known kind of support is generally made of partially elastic materials or materials which in any case have limited rigidity, in order to make the working position as comfortable and convenient as possible.

These known resting devices are not free from drawbacks, since they do not allow to adjust the wrist resting height, adapting it to the personal requirements of the individual operator.

Another drawback of these known resting devices is that they do not allow to tilt the keyboard with respect to the resting table so as to adjust its position depending on its particular shape, in order to facilitate its use.

Another drawback of this type of device is that they do not allow to provide independent and different resting heights for each wrist.

Another drawback of known resting devices is that they do not assist rotational and translational movements of the hand while using the mouse.

The aim of the present invention is to eliminate the above mentioned drawbacks of the background art, by providing an ergonomic wrist rest particularly for using computer keyboards and mice which allows to adjust easily and quickly the height of the wrist resting surface with respect to the resting surface of the keyboard and mouse, adapting it to the individual requirements of each operator.

Within this aim, an object of the present invention is to allow to adjust the inclination of the keyboard with respect to the resting table, so as to allow comfortable use of said keyboard regardless of its specific configuration.

Another object of the invention is to adjust independently the resting height of each wrist.

Another object of the invention is to assist both translational and rotary movements of the hand when using the mouse.

This aim and these and other objects, which will become better apparent hereinafter, are achieved by the present ergonomic wrist rest particularly for using computer keyboards and mice, comprising at least one base element, which can be positioned proximate to a keyboard or mouse and has a lower face which forms a resting surface for said base element which is adapted to rest on a supporting surface, characterized in that it comprises at least one resting element which is superimposed detachably on said base element at an upper face thereof which lies opposite said lower face and faces the lower surface of said resting element, the upper surface of said resting element, which lies opposite said lower surface, forming a resting region for at least one wrist and detachable means for the connection of said resting element to said base element.

Further characteristics and advantages of the present invention will become better apparent from the following detailed description of a preferred but not exclusive embodiment of an ergonomic wrist rest particularly for using computer keyboards and mice, illustrated by way of non-limiting example in the accompanying drawings, wherein:
Figure 1 is a perspective view of the device according to the invention in a first embodiment, in a partially assembled configuration;
Figure 2 is a perspective view of the device of Figure 1, in the assembled configuration;
Figure 3 is a perspective view of the device according to the invention in a second embodiment, in a partially assembled configuration;
Figure 4 is a perspective view of the device of Figure 3 in the assembled configuration;
Figure 5 is a perspective view of the device according to the invention in a third embodiment, in a partially assembled configuration;
Figure 6 is a perspective view of the device of Figure 5 in the assembled configuration;
Figure 7 is a perspective view of the device according to the invention in a fourth embodiment, in a partially assembled configuration;
Figure 8 is a perspective view of the device of Figure 7 in the assembled configuration;
Figure 9 is a perspective view of the device according to the invention in a fifth embodiment, in the assembled configuration;
Figure 10 is a perspective view of the device according to the invention in the sixth embodiment, in the assembled configuration;
Figure 11 is a perspective view of the device according to the invention in a seventh embodiment, in the assembled configuration;
Figure 12 is a perspective view of the device according to the invention in an eighth embodiment, in the assembled configuration;
Figure 13 is a perspective view of the device according to the invention in a ninth embodiment, in the assembled configuration.

With reference to the figures, the reference numeral 1 generally designates an ergonomic wrist rest particularly for using computer keyboards and mice according to the invention.

The device 1 comprises a base element 2, which can be arranged proximate to a keyboard T or a mouse M and has a lower face 3 which forms a resting surface which is adapted to rest on a supporting surface P.

In an alternative embodiment, the base element 2 is formed monolithically with the keyboard T.

In another alternative embodiment, the base element 2 is formed monolithically with a conventional piece of furniture, such as a table, desk and the like.

The device 1 further comprises at least one resting element 4 which is detachably superimposed on the base element 2 at an upper face 5 thereof which lies opposite the lower face 3 and a lower surface 23 of said resting element.

The upper surface 25 of the resting element 4, advantageously made of a substantially rigid material, forms a resting region for at least one wrist, preferably without discontinuities.

The resting element 4 is retained on the base element 2 by detachable connecting means 6.

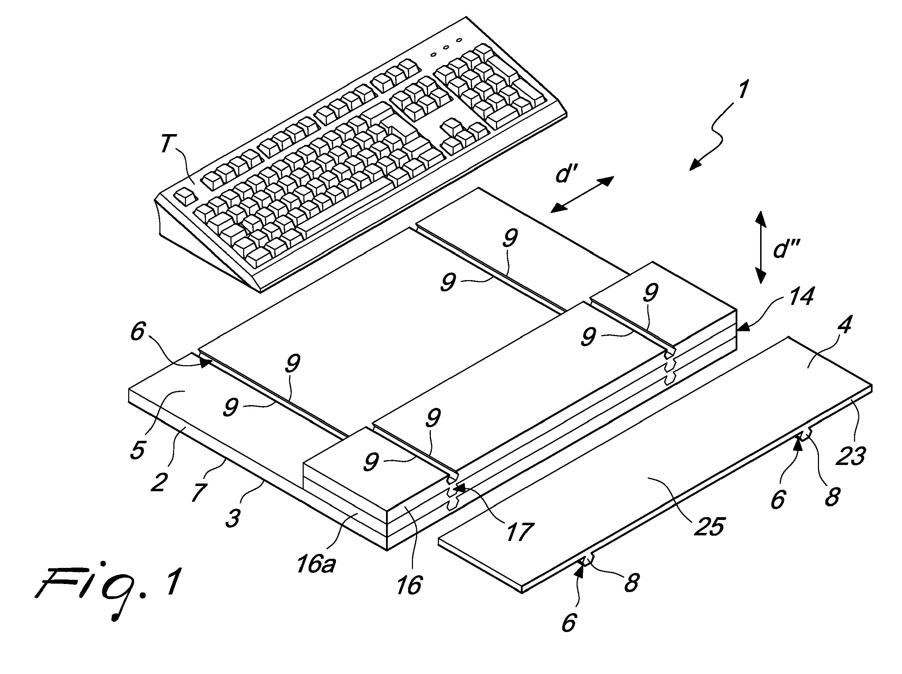

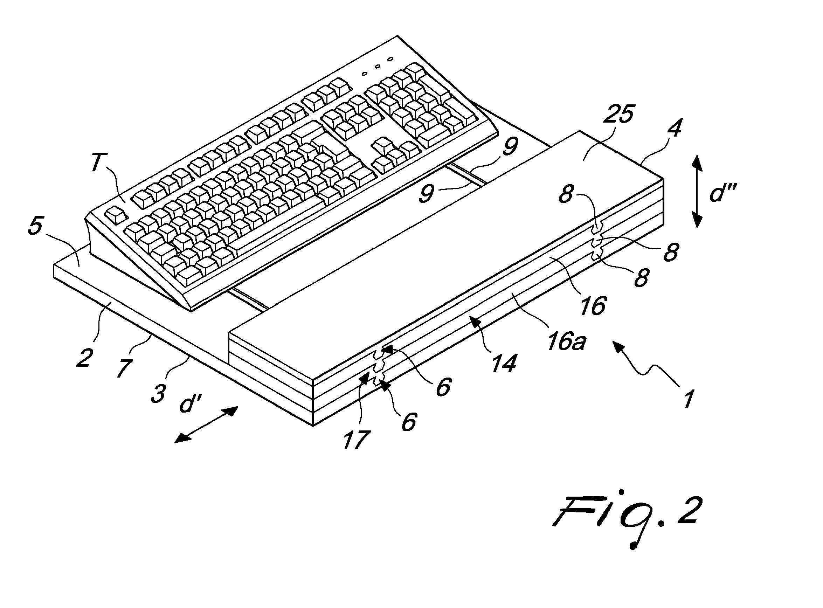

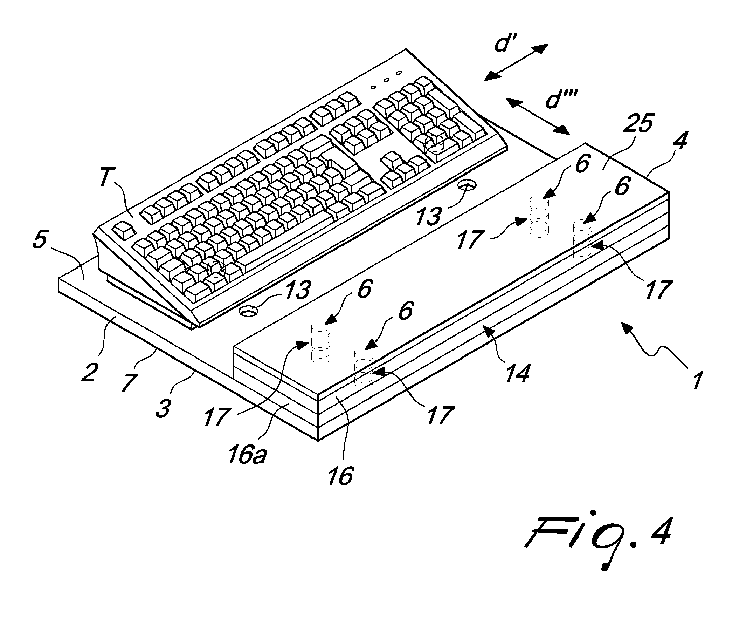

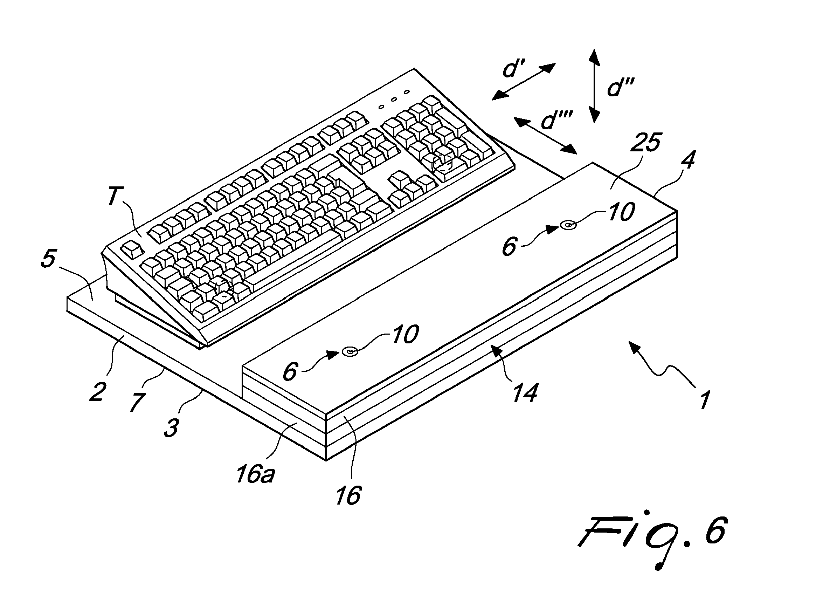

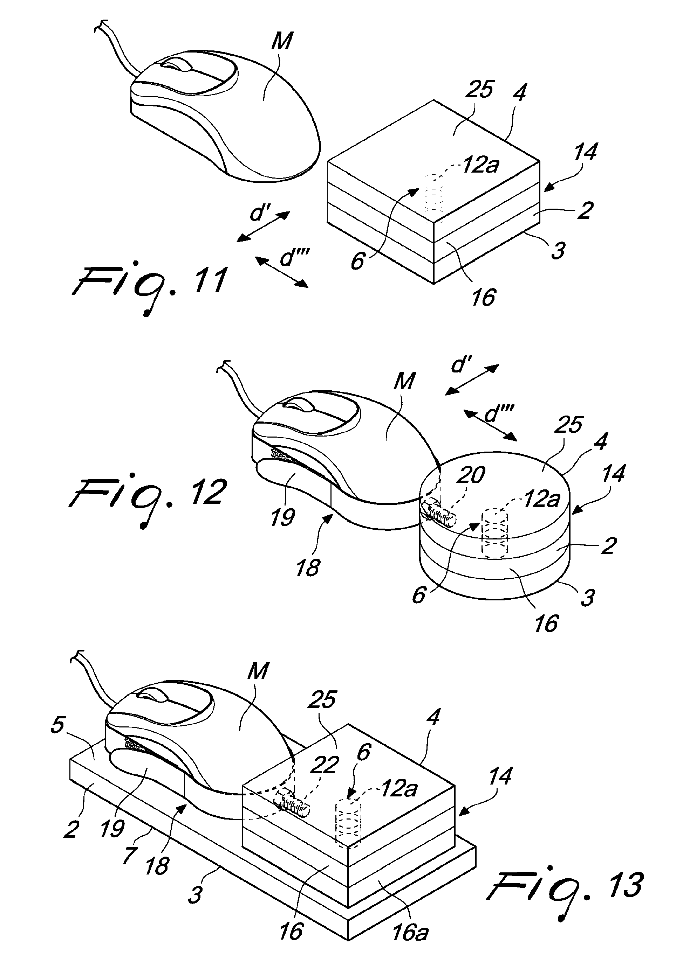

Conveniently, the device 1 comprises a supporting element 7 for the keyboard T or the mouse M which is associated with the base element 2 and for example is formed monolithically therewith, as shown in Figures 1 to 6 and 13.

Advantageously, the connecting means 6 comprise at least one straight sliding guide 8, which is interposed between the base element 2 and the resting element 4.

The guide 8 is adapted to prevent movements of the resting element 4 with respect to the base element 2 along at least one first direction d', which is substantially parallel to the resting surface P.

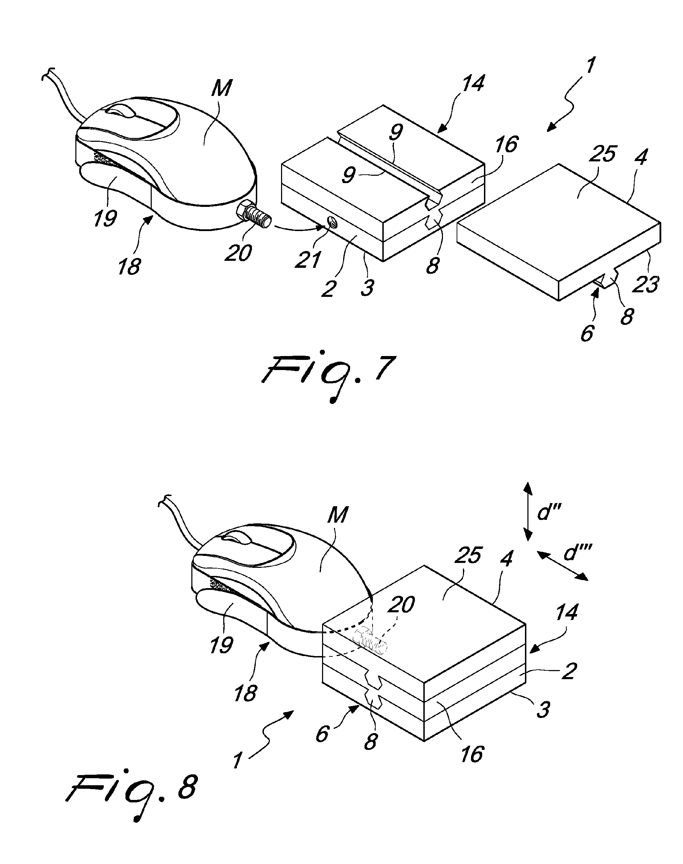

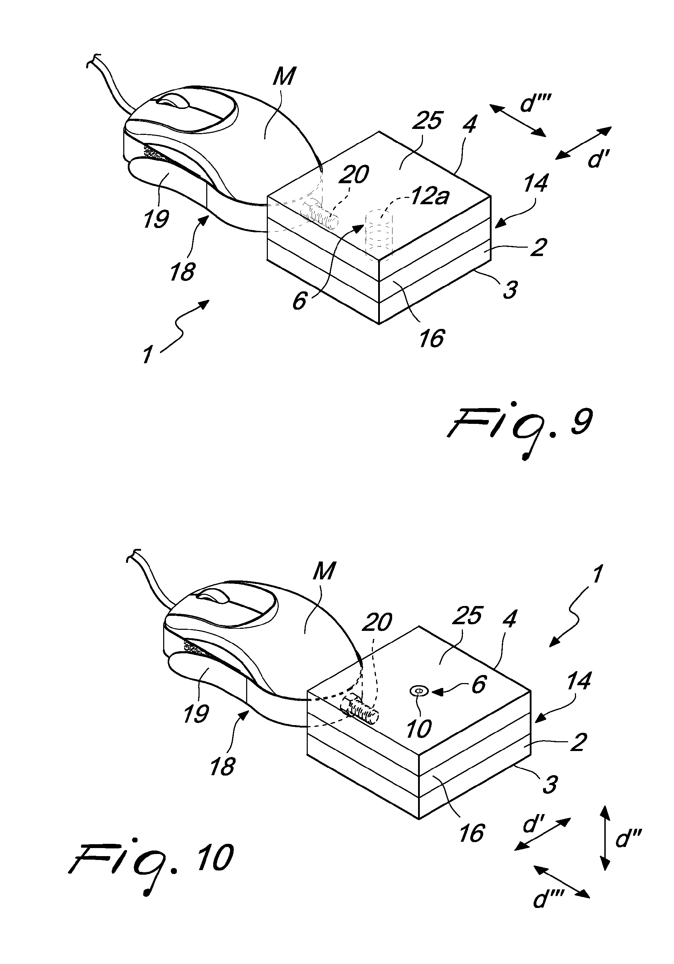

In a preferred embodiment, shown in Figures 1, 2, 7 and 8, the guide 8 comprises one or more coupling undercuts 9, which are suitable to prevent the separation of the resting element 4 from the base element 2 along a second direction d", which is substantially perpendicular to the resting surface formed by the lower face 3.

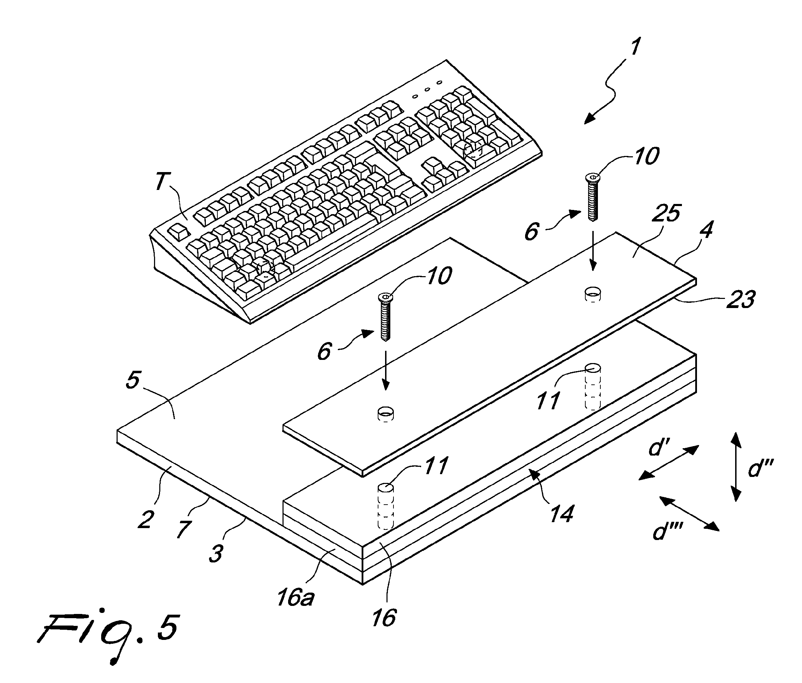

In an alternative embodiment of the connecting means 6, shown in Figures 5, 6 and 10, said means comprise one or more threaded elements 10, for example two screws, which engage in as many threaded holes 11 formed in the base element 2.

The threaded elements 10 are adapted to prevent the movements of the resting element 4 with respect to the base element 2 along the first and second directions, respectively d' and d", and along a third direction d''' which is substantially parallel to the resting surface formed by the first face 3 and is perpendicular to the first direction d'.

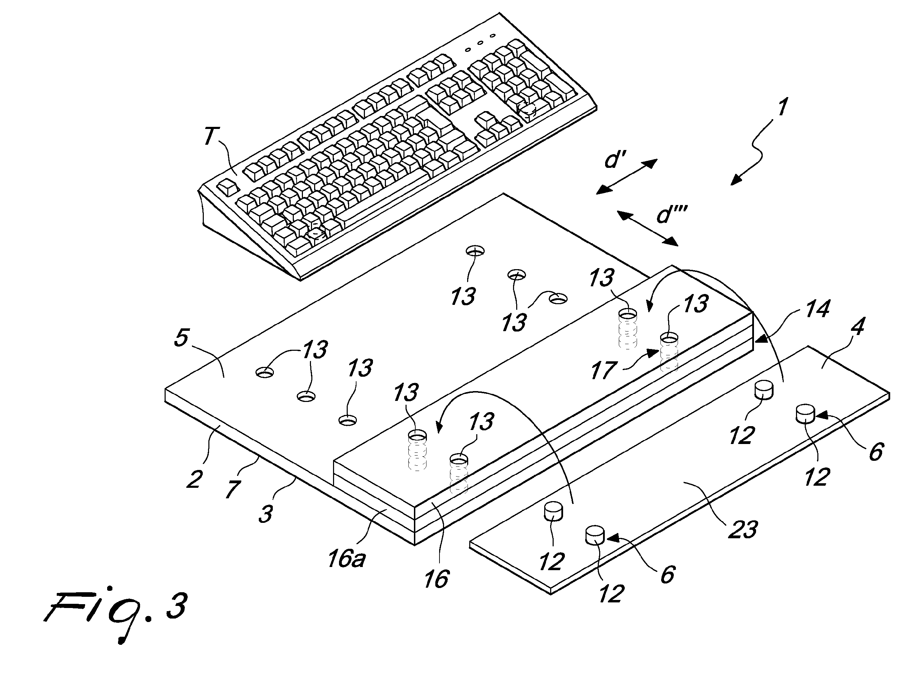

In another alternative embodiment of the connecting means 6, shown in Figures 3, 4, 9, 11, 12 and 13, said means comprise one or more protrusions 12, which are formed on the lower surface 23 and are adapted to enter corresponding seats 13 which are formed on the upper face 5 and are suitable to prevent the movements of the resting element 4 with respect to the base element 2 along the first and third directions, respectively d' and d'''.

If a single substantially cylindrical pivot 12a is interposed between the base element 2 and the resting element 4, the resting element 4 is associated so that it can rotate with respect to the base element 2 about the axis formed by the pivot 12a.

Preferably, the device 1 comprises adjustment means 14, which can be interposed between the resting element 4 and the base element 2, for adjusting the height of the resting region, which is formed by the upper surface 25, with respect to the resting surface formed by the lower face 3.

Conveniently, the connecting means 6 are adapted to retain detachably the resting element 4 to the adjustment means 14 and the adjustment means 14 to the base element 2.

In a preferred embodiment, the adjustment means 14 comprise one or more plate-like elements 16, preferably a plurality thereof.

Conveniently, the connecting means 6 comprise retention means 17, which are interposed between two contiguous plate-like elements 16 which are adapted to retain between them the plate-like elements 16 along at least two of the first, second and third directions, respectively d', d", and d'''.

In a preferred embodiment, at least one plate-like element 16, for example the first plate-like element 16a, is associated slidingly with the supporting element 7, which is formed monolithically with the base element 2, by means of a guide 8 which runs along said supporting element.

Preferably, the resting element 4 and the plate-like elements 16 have a thickness and/or at least one dimension which can vary with respect to one another.

As an alternative, the resting element 4 and the plate-like elements 16 have a thickness which increases along the first and/or third direction, respectively d' and d'''.

Conveniently, the device 1 comprises detachable interconnection means 18 between the mouse M and at least one among the base element 2, the resting element 4 and the adjustment means 14.

Advantageously, the interconnection means 18 comprise a flexible strap 19, which is adapted to surround perimetrically the mouse M and is rigidly connected, by way of adjustment means 20, to at least one among the base element 2, the resting element 4 and the adjustment means 14.

Preferably, the adjustment means 20 comprise a threaded element, which is monolithically associated with the strap 19 and is adapted to enter a corresponding threaded opening 21 which is formed in the base element 2, in the resting element 4 or in the adjustment means 14.

The operation of the present invention is as follows.

Preferably, the keyboard T and/or the mouse M are arranged above the supporting element 7, which is formed monolithically with the base element 2, in order to rigidly couple the keyboard T and/or the mouse M to the device 1.

The resting element 4 is associated with the base element 2, either directly or by means of the interposition of the adjustment means 14, so as to obtain the chosen height of the resting region formed by the upper surface 25 with respect to the resting surface formed by the lower face 3.

In particular, between the base element 2 and the resting element 4, one or more plate-like elements 16 are interposed which have mutually different thicknesses and are combined so as to obtain the chosen height of the wrist resting region, in practice providing a precision adjustment.

By interchanging at will the plate-like elements 16, it is possible to adapt the height of the wrist resting region formed by the upper surface 25 to the individual requirements.

The device 1 according to the invention further allows to tilt the keyboard T with respect to the resting surface formed by the lower face 3 or to move the wrists closer to the keyboard, if said keyboard has a particularly conspicuous front edge, by using respectively a first plate-like element 16a and a resting element 4 which have larger dimensions, along the direction which is perpendicular to the direction formed by the resting of the wrists, than the plate-like elements 16 with which they are associated.

These functions can also be obtained by using plate-like elements 16 and a resting element 4 which have mutually identical dimensions, using instead the mutual sliding allowed by the guides 8 interposed between two contiguous elements.

If it is necessary to provide mutually different resting heights for each wrist, this can be done by using a resting element 4 and plate-like elements 16 whose cross-section increases along the chosen direction, or which have a constant cross-section and mutually different dimensions along the direction formed by the resting of the wrists, thus achieving a sort of step of the chosen extent.

If the connecting means 6 and retention means 17 comprise a single pivot 12a which is substantially cylindrical and is coupled rotatably to a plate-like element 16 or to the base element 2, the elements that are associated in this manner also assist the rotary movements of the operator when using the mouse M.

In the embodiment which uses the strap 19, said strap can be adapted, thanks to its flexibility, to mice M which are characterized by any kind of shape; further, the adjustment means allow to adjust the distance of the resting element 4 from the mouse, at the same time rigidly coupling them.

In practice it has been found that the described invention achieves the intended aim and objects, and in particular the fact is stressed that it allows a precise adjustment of the height of the wrist resting region.

The invention thus conceived is susceptible of numerous modifications and variations, all of which are within the scope of the appended claims.

All the details may further be replaced with other technically equivalent elements.

In practice, the materials used, as well as the contingent shapes and dimensions, although the materials and dimensions described above are preferred, may be any according to requirements without thereby abandoning the scope of the protection of the appended claims.

The disclosures in Italian Patent Applications No. MO2006A000045, MO2006A000046, MO2006A000047, MO2006A000048, MO2006A000049 and MO2006A000050, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An ergonomic wrist rest particularly for using computer keyboards and mice, comprising at least one base element, which can be positioned proximate to a keyboard or mouse and has a lower face which forms a resting surface for said base element which is adapted to rest on a supporting surface, **characterized in that** it comprises at least one resting element which is superimposed detachably on said base element at an upper face thereof which lies opposite said lower face and faces the lower surface of said resting element, the upper surface of said resting element, which lies opposite said lower surface, forming a resting region for at least one wrist and detachable means for the connection of said resting element to said base element.

2. The device according to claim 1, **characterized in that** it comprises at least one supporting element for said keyboard or mouse which is associated with said base element.

3. The device according to claim 2, **characterized in that** said supporting element is formed monolithically with said base element.

4. The device according to one or more of the preceding claims, **characterized in that** said connecting means comprise at least one straight sliding guide which is interposed between said base element and said resting element and is adapted to prevent the movements of said resting element with respect to said base element along at least one first direction which is substantially parallel to said resting surface.

5. The device according to claim 4, **characterized in that** said guide comprises at least one coupling undercut, which is adapted to prevent the separation of said resting element from said base element along a second direction which is substantially perpendicular to said resting surface.

6. The device according to one or more of the preceding claims, **characterized in that** said connecting means comprise at least one threaded element which engages in a corresponding threaded hole which is formed in said base element and is adapted to prevent the movements of said resting element with respect to said base element along at least said first and second directions and along a third direction which is substantially parallel to said resting surface and substantially perpendicular to said first direction.

7. The device according to one or more of the preceding claims, **characterized in that** said connecting means comprise at least one protrusion which is formed on said lower surface and is adapted to enter a corresponding seat formed in said upper face and is suitable to prevent the movements of said resting element with respect to said base element along said first and third directions.

8. The device according to one or more of the preceding claims, **characterized in that** said protrusion is constituted by a substantially cylindrical pivot which is coupled rotatably with said base element.

9. The device according to one or more of the preceding claims, **characterized in that** it comprises means for adjusting the height of said resting region formed by said upper surface with respect to said resting surface, said means being interposable between said resting element and said base element, said connecting means retaining detachably said resting element to said adjustment means and said adjustment means to said base element.

10. The device according to claim 9, **characterized in that** said adjustment means comprise at least one plate-like element, which can be interposed between said base element and said resting element in order to vary the height of said resting region, which is formed by said upper surface, with respect to said resting surface.

11. The device according to claim 10, **characterized in that** said adjustment means comprise a plurality of said plate-like elements.

12. The device according to one or more of the preceding claims, **characterized in that** said connecting means comprise retention means which are adapted to mutually retain said plate-like elements along at least two of said first, second and third directions, said retention means being interposed between two contiguous plate-like elements.

13. The device according to one or more of the preceding claims, **characterized in that** at least one of said plate-like elements is associated slidingly with said supporting element along at least one of said first and third directions, said supporting element being formed monolithically with said base element and said guide being arranged along said supporting element.

14. The device according to one or more of the preceding claims, **characterized in that** said resting element and said plate-like elements have mutually variable thicknesses and at least one mutually variable dimension.

15. The device according to one or more of the preceding claims, **characterized in that** said resting element and said plate-like elements have a thickness which increases along at least one of said first and third directions.

16. The device according to one or more of the preceding claims, **characterized in that** it comprises detachable means for interconnecting between said mouse and at least one among said base element, said resting element and said adjustment means.

17. The device according to claim 16, **characterized in that** said interconnection means comprise at least one flexible strap, which is adapted to wrap perimetrically around said mouse and is rigidly connected, by way of distance adjustment means, to at least one among said base element, said resting element and said adjustment means.

18. The device according to one or more of the preceding claims, **characterized in that** said adjustment means comprise a threaded element, which is associated with said strap and is suitable to enter a corresponding opening which is formed in at least one among said base element, said resting element and said adjustment means.

19. The device according to one or more of the preceding claims, **characterized in that** said base element is formed monolithically with said keyboard and/or mouse.

20. The device according to one or more of the preceding claims, **characterized in that** said resting region, formed by said upper surface, is substantially without discontinuities.

21. The device according to one or more of the preceding claims, **characterized in that** said upper surface is made of a substantially rigid material.
